**Europäisches Patentamt**

**European Patent Office**

**Office européen des brevets**

(19)

(11) Veröffentlichungsnummer: **0 038 835**
**B1**

(12) **EUROPÄISCHE PATENTSCHRIFT**

(45) Veröffentlichungstag der Patentschrift:
**11.07.84**

(51) Int. Cl.³: **F 16 D 3/50,** F 16 D 3/62,
F 16 D 3/78

(21) Anmeldenummer: **80902111.6**

(22) Anmeldetag: **29.10.80**

(86) Internationale Anmeldenummer:
**PCT/DE 80/00164**

(87) Internationale Veröffentlichungsnummer:
**WO 81/01317 (14.05.81** Gazette **81/12)**

(54) **WELLENKUPPLUNG.**

(30) Priorität: **31.10.79 DE 2943921**
**27.02.80 DE 3007268**
**07.05.80 DE 3017398**

(43) Veröffentlichungstag der Anmeldung:
**04.11.81 Patentblatt 81/44**

(45) Bekanntmachung des Hinweises auf die Patenterteilung:
**11.07.84 Patentblatt 84/28**

(84) Benannte Vertragsstaaten:
**CH DE FR GB LI LU SE**

(56) Entgegenhaltungen:
**DE - A - 2 510 678**
**FR - A - 2 090 760**
**FR - A - 2 398 217**
**GB - A - 310 447**
**GB - A - 618 862**
**US - A - 2 630 692**

(73) Patentinhaber: **Chivari, Ilie, Berliner Strasse 1,**
**D-4690 Herne 2 (DE)**

(72) Erfinder: **Chivari, Ilie, Berliner Strasse 1,**
**D-4690 Herne 2 (DE)**

(74) Vertreter: **Weisse, Jürgen, Dipl.-Phys.,**
**Bökenbusch 41 Postfach 11 03 86,**
**D-5620 Velbert 11-Langenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Wellenkupplung zwischen einem um eine Eingangsachse umlaufenden Teil und einem um eine Ausgangsachse umlaufenden Teil, welche einen Knickwinkel zwischen Eingangsachse und Ausgangsachse zulässt, enthaltend

(a) eine erste Kupplungshälfte, die mit dem um die Eingangsachse umlaufenden Teil verbindbar ist,

(b) eine zweite Kupplungshälfte, die mit dem um die Ausgangsachse umlaufenden Teil verbindbar ist,

(c) ein Zwischenglied, das zwischen der ersten und der zweiten Kupplungshälfte angeordnet ist,

(d) zwei Systeme von flexiblen Verbindungsgliedern, die sich im wesentlichen längs des Umfangs von der ersten Kupplungshälfte zu dem Zwischenglied und von dem Zwischenglied zu der zweiten Kupplungshälfte erstrecken, wobei

(e) jeweils ein System von flexiblen Verbindungsgliedern sich in einer ersten Drehrichtung und das andere System von flexiblen Verbindungsgliedern sich in einer dazu entgegengesetzten zweiten Drehrichtung in Umfangsrichtung erstreckt.

Bei bekannten Wellenkupplungen dieser Art bestehen die Verbindungsglieder aus geraden Federstahllamellen, die sekantial angeordnet und an einem Ende an der ersten Kupplungshälfte und am anderen Ende an der zweiten Kupplungshälfte unmittelbar befestigt sind. Es sind zwei Paare von parallel und einander diametral gegenüberliegenden Federstahllamellen vorgesehen, so dass die Federstahllamellen insgesamt längs der Seiten eines Quadrats angeordnet sind. Die Federstahllamellen sind so an den beiden Kupplungshälften befestigt, dass bei jeder Drehrichtung jeweils ein Paar auf Zug beansprucht wird und das Drehmoment überträgt. Solche Kupplungen lassen einen kleinen Knickwinkel zwischen der Eingangsachse und der Ausgangsachse zu. Dieser Knickwinkel ist jedoch sehr beschränkt. Die Federstahllamellen werden einer Wechselbelastung unterworfen, durch welche die Lebensdauer stark beeinträchtigt wird.

Durch die DE-A 2 510 678 ist eine Wellenkupplung bekannt, die eine erste Kupplungshälfte, eine zweite Kupplungshälfte und ein dazwischen angeordnetes Zwischenglied enthält. Es sind zwei Systeme von jeweils einer Mehrzahl von flexiblen Verbindungsgliedern vorgesehen, die sich im wesentlichen in Umfangsrichtung von der ersten Kupplungshälfte zu dem Zwischenglied und von dem Zwischenglied zu der zweiten Kupplungshälfte erstrecken. Dabei erstreckt sich jeweils ein System von flexiblen Verbindungsgliedern in Umfangsrichtung in einer ersten Drehrichtung und das andere System von flexiblen Verbindungsgliedern erstreckt sich in Umfangsrichtung in einer dazu entgegengesetzten zweiten Drehrichtung. Auf diese Weise wird bei einer Drehrichtung das eine System von flexiblen Verbindungsgliedern auf Zug beansprucht und kann daher das Antriebsdrehmoment übertragen, während bei der entgegengesetzten Drehrichtung das andere System auf Zug beansprucht wird und das Antriebsdrehmoment überträgt. Ausserdem werden die Kupplungshälften und das Zwischenstück in definierter Lage zueinander gehalten, da die Teile gegen Verdrehung nach der einen wie der anderen Richtung durch jeweils ein auf Zug beanspruchtes System gehalten sind.

Bei der bekannten Anordnung sind an der ersten Kupplungshälfte an zwei im wesentlichen diametral einander gegenüberliegenden Stellen je ein Paar von geraden Federgliedern angebracht, die sich im wesentlichen in Umfangsrichtung erstrecken und einen im wesentlichen rechten Winkel miteinander einschliessen. Die Federglieder jedes dieser Paare sind an dem Zwischenglied an zwei im wesentlichen diametral einander gegenüberliegenden Stellen befestigt. Das Zwischenglied ist in entsprechender Weise über zwei Paare von Federgliedern mit der zweiten Kupplungshälfte verbunden. Die Federglieder verlaufen so im wesentlichen längs der Seiten eines Quadrats. Jeweils eines der Federglieder jedes der erwähnten Paare gehört dem einen System an, das in der einen Drehrichtung auf Zug beansprucht wird und das Antriebsdrehmoment überträgt, und das andere Federglied jedes Paares gehört dem anderen System an und wird in der anderen Drehrichtung zur Übertragung des Antriebsdrehmoments auf Zug beansprucht. Die Verbindungsglieder sind langgestreckte Lamellen oder Federdrahtstücke.

Bei dieser Konstruktion ist die Winkelbeweglichkeit des Zwischenstücks gegenüber Eingangs- und Ausgangsachse begrenzt, da das Zwischenstück jeweils nicht nur durch die flexiblen Verbindungsglieder des einen Systems sondern auch durch die entgegengesetzt gerichteten Verbindungsglieder des anderen Systems mit den Kupplungshälften verbunden ist. Dadurch ist bei solchen Wellenkupplungen trotz Verwendung eines Zwischenstücks nur ein relativ kleiner Knickwinkel zwischen Eingangs- und Ausgangsachse erreichbar.

Durch die FR-A1 2 398 217 ist eine winkeltreue Lenkerkupplung bekannt, die einen Radialversatz zwischen zwei umlaufenden Teilen gestattet und dort insbesondere für den Radantrieb von Schienenfahrzeugen vorgesehen ist. Die Lenkerkupplung beruht auf dem Prinzip der Oldham-Kupplung mit einem Zwischenglied, das mit dem treibenden und getriebenen Teil jeweils durch um 90° gegeneinander versetzte Geradführungsmittel verbunden ist. Die Geradführungsmittel sind bei der dort beschriebenen Anordnung Parallellenkergetriebe. Bei einer solchen Kupplung führt das Zwischenglied eine kreisende Bewegung aus, die zu Unwuchtkräften führt. Die FR-A1 2 398 217 sieht vor, dass ein zweites Zwischenglied ebenfalls durch Parallellenkergetriebe mit dem treibenden und dem getriebenen Teil gekoppelt ist jedoch so, dass es eine zu der Bewegung des ersten Zwischenglieds gegenphasige Bewegung ausführt. Dadurch werden die Unwuchtkräfte kompensiert.

Bei dieser Anordnung handelt es sich um eine Lenkerkupplung für radialen Achsversatz, bei welcher die Funktion auf den Bewegungen der starren Lenker und sonstigen Kupplungsteile beruht, nicht um eine Kupplung mit flexiblen Verbindungsgliedern, die bei Auftreten eines Knickwinkels zwischen Eingangs- und Ausgangsachse elastisch verformt werden. Die Verwendung von zwei Zwischengliedern dient der Unwuchtkompensation.

Der Erfindung liegt die Aufgabe zugrunde, eine Wellenkupplung der eingangs definierten Art so auszubilden, dass bei kompakter Bauweise ein grösserer Knickwinkel und gegebenenfalls auch ein Radialversatz zwischen Eingangsachse und Ausgangsachse ermöglicht wird als bei vorbekannten Kupplungen und die Lebensdauer verbessert wird.

Erfindungsgemäss wird diese Aufgabe dadurch gelöst, dass

(f) das Zwischenglied von zwei getrennten Teilen gebildet ist und

(g) die Verbindungsglieder des einen Systems über den einen dieser Teile und die Verbindungsglieder des anderen Systems über den anderen Teile geführt sind.

Durch die Verwendung zweier solcher Zwischenglieder kann sich das dem einen System von Verbindungsgliedern zugeordnete Zwischenglied bei einem Knickwinkel zwischen Eingangs- und Ausgangsachse geneigt zu den Achsen einstellen, ohne daran durch die Verbindungsglieder des anderen Systems gehindert zu werden. Es kann so die effektive Länge der Verbindungsglieder bei kompakter Bauweise der Wellenkupplung vergrössert werden. Damit erhöht sich auch die Flexibilität der Kupplung bei Winkelversatz zwischen Eingangsachse und Ausgangsachse. Durch die Verwendung einer Mehrzahl von Verbindungsgliedern in regelmässiger Anordnung gleichen sich die Kräfte auf das Zwischenglied aus, so dass das Zwischenglied in seiner Mittellage gehalten wird.

Weitere Ausgestaltungen der Erfindung sind Gegenstand der Unteransprüche.

Ausführungsbeispiele der Erfindung sind nachstehend unter Bezugnahme auf die zugehörigen Zeichnungen näher erläutert:

Fig. 1 zeigt einen Querschnitt durch eine erste Ausführungsform der erfindungsgemässen Wellenkupplung entlang der Linie I-I in Fig. 2,

Fig. 2 zeigt einen Längsschnitt durch die Wellenkupplung nach Fig. 1 entlang der Linie II-II in Fig. 1,

Fig. 3 zeigt einen Querschnitt durch eine zweite Ausführungsform der erfindungsgemässen Wellenkupplung entlang der Linie III-III in Fig. 4,

Fig. 4 zeigt einen Längsschnitt der Wellenkupplung nach Fig. 3 entlang der Linie IV-IV,

Fig. 5 zeigt einen Teil einer dritten Ausführungsform der erfindungsgemässen Wellenkupplung,

Fig. 6 zeigt einen Querschnitt durch die dritte Ausführung der Wellenkupplung,

Fig. 7 zeigt einen Querschnitt durch eine weitere modifizierte Ausführung der Wellenkupplung entlang der Linie VII-VII in Fig. 8 und

Fig. 8 zeigt einen Längsschnitt der Wellenkupplung nach Fig. 7 entlang der Linie VIII-VIII in Fig. 7.

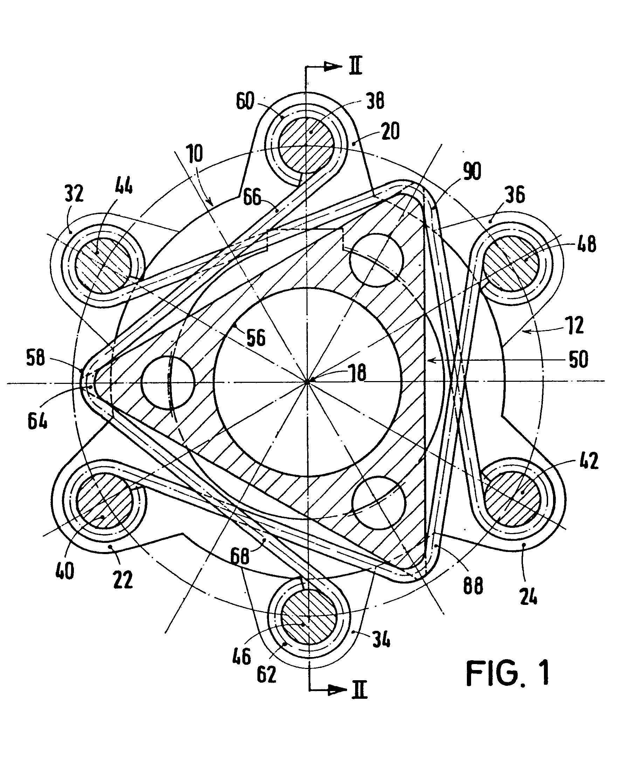

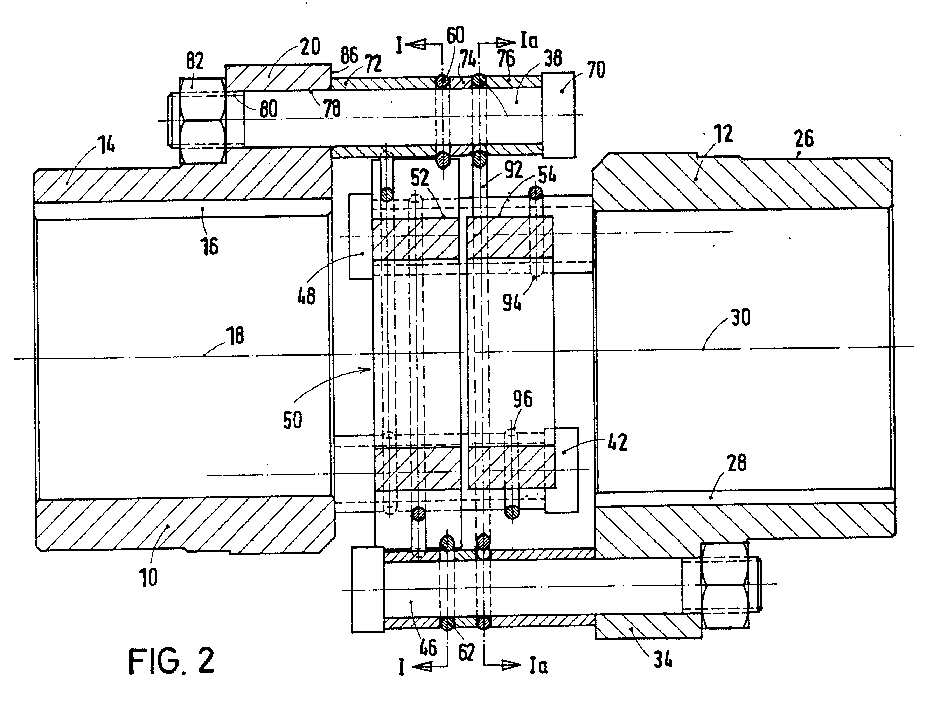

Bei der Ausführungsform nach Fig. 1 und 2 ist mit 10 eine erste Kupplungshälfte und mit 12 eine zweite Kupplungshälfte bezeichnet. Die erste Kupplungshälfte 10 besteht aus einer Nabe 14, welche mittels einer Keilnut 16 mit einem um eine Eingangsachse 18 umlaufenden Teil, z.B. einer Welle, undrehbar verbunden werden kann. An der Nabe 14 sitzen jeweils um 120° gegeneinander winkelversetzt drei radiale Ansätze 20, 22, 24.

Die zweite Kupplungshälfte 12 enthält ebenfalls eine Nabe 26, die mittels einer Keilnut 28 mit einem um eine Ausgangsachse 30 umlaufenden Teil, z.B.

ebenfalls einer Welle, undrehbar verbunden werden kann. Die Nabe 26 trägt drei um jeweils 120° gegeneinander winkelversetzte radiale Ansätze 32, 34 und 36.

Die radialen Ansätze 20, 22 und 24 der ersten Kupplungshälfte 10 tragen axial vorspringende Bolzen 38, 40 bzw. 42. An den radialen Ansätzen 32, 34 und 36 der zweiten Kupplungshälfte 12 sind axial vorspringende Bolzen 44, 46 bzw. 48 angebracht, die den Bolzen 38, 40 und 42 entgegengerichtet sind und zwischen diese greifen. Zwischen den Kupplungshälften 10 und 12 ist ein Zwischenglied 50 angeordnet, welches bei dem dargestellten Ausführungsbeispiel aus zwei Teilen 52 und 54 besteht. Wie aus Fig. 1 ersichtlich ist, hat das Zwischenglied 50 dreieckige Grundform mit einem zentralen Durchbruch 56 zur Verringerung der Masse. Der Bolzen 38 ist durch ein Verbindungsglied 58 in Gestalt eines Federstahldrahtstücks mit dem Bolzen 46 verbunden. Das Federstahldrahtstück ist V-förmig und weist an seinen Enden Augen 60 und 62 auf, die um Bolzen 38 bzw. 47 herumgreifen.

Das V-förmige Federstahldrahtstück des Verbindungsglieds 58 ist um die eine Kante des im Querschnitt dreieckigen Zwischenglieds 50 herumgeführt, die zur axialen Führung des Verbindungsglieds 58 mit einer Rinne 64 versehen ist. Das Federstahldrahtstück enthält somit einen ersten Schenkel 66, der sich von dem Bolzen 38 im wesentlichen tangential zu der Kante des Zwischenglieds 50 erstreckt und einen zweiten Schenkel 68, der von dieser Kante zu dem Bolzen 46 der zweiten Kupplungshälfte verläuft. Der Bolzen 46 der zweiten Kupplungshälfte ist dabei um 180° gegenüber dem Bolzen 38 der ersten Kupplungshälfte winkelversetzt.

Die Augen 60 und 62 sind auf den Bolzen 38 bzw. 46 festgeklemmt und in axialer Richtung gesichert. Das ist am besten aus Fig. 2 ersichtlich und wird anhand des Bolzens 38 und des Auges 60 erläutert:

Der Bolzen 38 weist einen Kopf 70 auf. Auf den Schaft des Bolzens 38 sind Abstandshülsen 72, 74, 76 aufgeschoben. Das Auge 60 ist zwischen die Abstandshülsen 72 und 74 eingeklemmt. Das Ende des Bolzens 38, das durch eine Axialbohrung 78 des radialen Ansatzes 20 hindurchragt, ist mit einem Gewinde 80 versehen. Auf das Gewinde 80 ist eine Mutter 82 aufgeschraubt. Durch Festziehen der Mutter 82 werden die Abstandshülsen 72, 74 und 76 durch den Kopf 70 des Bolzens 38 unter Zwischenlage des Auges 60 und eines Auges 84 eines anderen Verbindungsglieds gegen die Stirnfläche 86 des Ansatzes 20 festgezogen.

In ähnlicher Weise erfolgt die Befestigung des Verbindungsglieds 58 an dem Bolzen 46 sowie die Befestigung der anderen Verbindungsglieder an den übrigen Bolzen.

Wie aus Fig. 1 ersichtlich ist, ist der Bolzen 40 der ersten Kupplungshälfte 10 über ein V-förmiges Verbindungsglied 88, das sich an der nächsten Kante des Zwischenglieds 50 abstützt, mit dem Bolzen 48 der zweiten Kupplungshälfte 12 verbunden, der dem Bolzen 40 diametral gegenüberliegt. Der Bolzen 42 der ersten Kupplungshälfte 10 ist über ein V-förmiges Verbindungsglied 90, das sich an der dritten Kante des Zwischenglieds 50 abstützt, mit dem Bolzen 44 der zweiten Kupplungshälfte 12 verbunden, der dem Bolzen 42 diametral gegenüberliegt. Die Ausbildung, Abstützung und Befestigung der Verbindungsglieder 88 und 90 erfolgt in gleicher Weise wie bei dem Verbindungsglied 58. Es sind auf diese Weise drei um jeweils 120° gegeneinander versetzte Systeme von Verbindungsgliedern 58, 88 und 90 vorgesehen, so dass sich die auf den Teil 52 des Zwischenglieds 50 wirkenden Abstützkräfte aufheben und der Teil 52 des Zwischenglieds 50 frei zwischen den Verbindungsgliedern 58, 88, 90 gehalten ist.

In Fig. 1 erstrecken sich die Verbindungsglieder 58, 88, 90 von der ersten Kupplungshälfte 10 jeweils entgegen dem Uhrzeigersinn um das Zwischenglied 50 herum zur zweiten Kupplungshälfte 12. Sie übertragen das Drehmoment, wenn die erste Kupplungshälfte 10 im Uhrzeigersinn in Fig. 1 angetrieben wird und die Drehbewegung auf die zweite Kupplungshälfte 12 überträgt. Ein zweiter Satz von Verbindungsgliedern zwischen den Bolzen 38, 46 und 40, 48 und 42, 44 erstreckt sich im entgegengesetzten Drehsinn um den zweiten Teil 54 des Zwischenglieds 50. Diese drei Verbindungsglieder sind in Fig. 2 mit 92, 94 und 96 bezeichnet. Ein Schnitt längs der Linie Ia-Ia ergibt das gleiche Bild wie Fig. 1, da hierbei die Blickrichtung entgegengesetzt ist.

Die beschriebene Anordnung gestattet einen Winkelversatz zwischen der Eingangswelle 18 und der Ausgangswelle 30 unter Durchbiegung der Verbindungsglieder 58, 88, 90 bzw. 92, 94, 96. Gegenüber vorbekannten Kupplungen der geschilderten Art ergibt sich der Vorteil, dass bei kleinem Raumbedarf eine grössere Länge der Verbindungsglieder zur Verfügung steht.

Statt der Federstahldrahtteile können als Verbindungsglieder auch langgestreckte Federstahllamellen vorgesehen sein. Statt der dreieckigen Teile 50, 54 des Zwischenglieds 50 sind dann sternförmige Teile vorgesehen, an deren Spitzen die Federstahllamellen angelenkt sind.

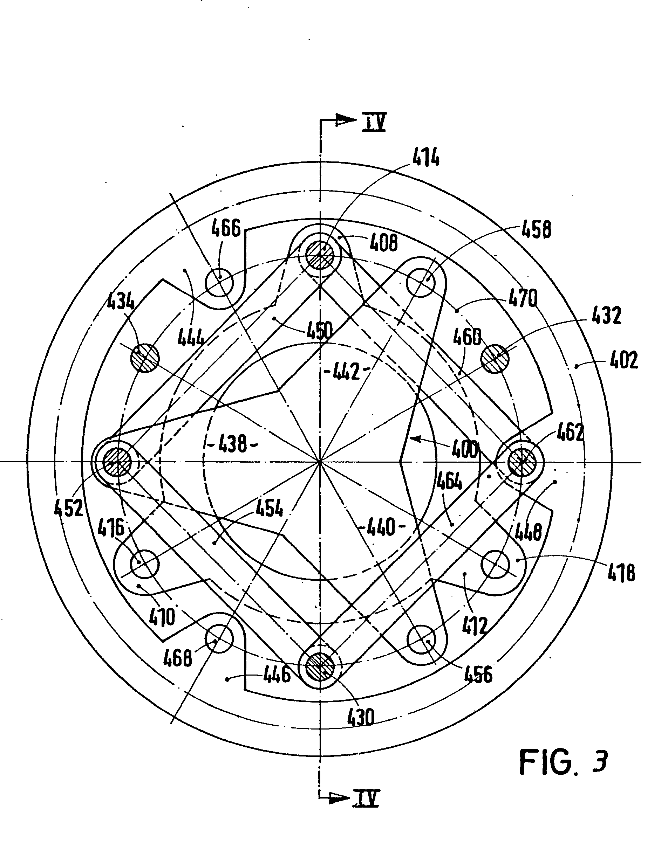

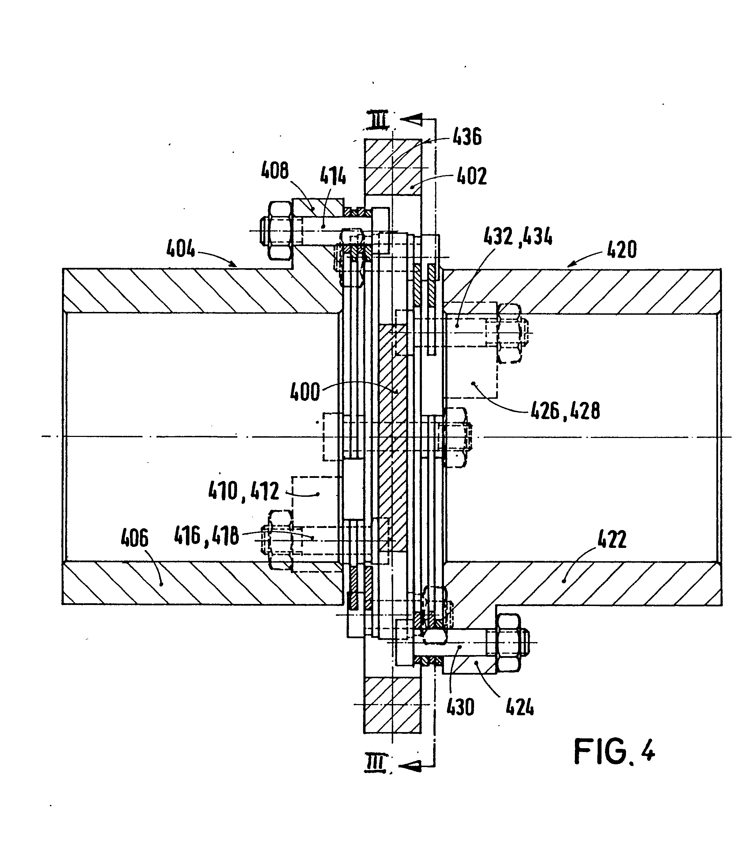

Bei der Ausführungsform nach Fig. 3 und 4 besteht das Zwischenglied aus einem sternförmigen ersten Teil 400 für die Verdrehung im Uhrzeigersinn und einem in der gleichen Ebene angeordneten und den Teil 400 umgebenden, ringförmigen zweiten Teil 402 für die Verdrehung entgegen dem Uhrzeigersinn. Der Übersichtlichkeit halber sind in Fig. 3 für jeden Drehsinn nur ein Paar von Verbindungsgliedern dargestellt. Weitere Paare sind jeweils um 120° dagegen winkelversetzt vorgesehen.

Im einzelnen enthält die Wellenkupplung von Fig. 3 und 4 eine erste Kupplungshälfte 404 mit einer Nabe 406 und drei radial nach aussen vorspringenden, um 120° gegeneinander winkelversetzten Ansätzen 408, 410, 412. An den Ansätzen 408, 410, 412 sitzen axiale Bolzen 414, 416, 418. Eine zweite Kupplungshälfte 420 weist eine Nabe 422 und drei um 120° gegeneinander und um 180° gegen die Ansätze 408, 410, 412 winkelversetzte radiale Ansätze 424, 426, 428 auf. An den Ansätzen 424, 426, 428 sitzen axiale Bolzen 430, 432 bzw. 434, die sich in Richtung auf die erste Kupplungshälfte 404 erstrecken und zwischen die Bolzen 408, 410, 412 greifen.

Symmetrisch zu einer mittleren Radialebene 436 zwischen den beiden Kupplungshälften 404, 420 sind der sternförmige erste Teil 400 und der ringförmige zweite Teil 420 des Zwischenglieds angeordnet. Der sternförmige erste Teil 400 hat drei um 120° gegeneinander winkelversetzte radiale Arme 438, 440, 442. Der ringförmige zweite Teil 402 hat drei um 120° gegeneinander und entgegen dem Uhrzeigersinn um 60° gegen die Arme 438, 440, 442 des Teils 400 winkelversetzte, nach innen ragende Ansätze 444, 446, 448.

Ein als Federstahllamelle 450 ausgebildetes Verbindungsglied sitzt auf dem Bolzen 414 und ist mit einem Bolzen 452 auf dem Arm 438 des Teils 400 verbunden. Eine weitere Federstahllamelle 454 erstreckt sich zwischen dem Bolzen 452 des Teils 400 und dem Bolzen 430 der zweiten Kupplungshälfte 420. Die Federstahllamellen 450, 454 bilden so ein System von Verbindungsgliedern, das sich entgegen dem Uhrzeigersinn um die Umlaufachse herumerstreckt und wirksam wird, wenn die erste Kupplungshälfte 404 im Uhrzeigersinn angetrieben wird und die zweite Kupplungshälfte 420 mitnimmt. Zwei weitere (nicht dargestellte) Systeme von Verbindungsgliedern sind um jeweils 120° winkelversetzt zwischen dem Bolzen 416, einem Bolzen 456 auf dem Arm 440 des Teils 400 und dem Bolzen 432, sowie zwischen dem Bolzen 418, einem Bolzen 458 auf dem Arm 442 des Teils 400 und dem Bolzen 434 vorgesehen.

Für die entgegengesetzte Drehrichtung, d.h. wenn die erste Kupplungshälfte 404 entgegen dem Uhrzeigersinn angetrieben wird und die zweite Kupplungshälfte 420 entsprechend mitnimmt, sind Systeme von Verbindungsgliedern vorgesehen, die sich im Uhrzeigersinn um die Umlaufachse herumerstrecken. Ein erstes solches System besteht aus einer Federstahllamelle 460, die sich von dem Bolzen 414 zu einem Bolzen 462 auf dem Ansatz 448 des ringförmigen Teils 402 erstreckt, und einer Federstahllamelle 464, die sich von dem Bolzen 462 zu dem Bolzen 430 erstreckt. Zwei ähnlich aufgebaute weitere (nicht dargestellte) Systeme von Verbindungsgliedern sind wieder um 120° winkelversetzt angeordnet und enthalten Federstahllamellen zwischen dem Bolzen 416 und einem Bolzen 466 an dem Ansatz 444 und zwischen dem Bolzen 466 und dem Bolzen 432 der zweiten Kupplungshälfte 420, sowie zwischen dem Bolzen 418 und einem Bolzen 458 an dem Ansatz 442 und zwischen dem Bolzen 458 und dem Bolzen 434 der zweiten Kupplungshälfte 420.

Wie aus Fig. 3 ersichtlich ist, sitzen alle Bolzen auf einem gemeinsamen Teilkreis 470. Es wird auf diese Weise eine in axialer Richtung sehr kompakte Anordnung erhalten.

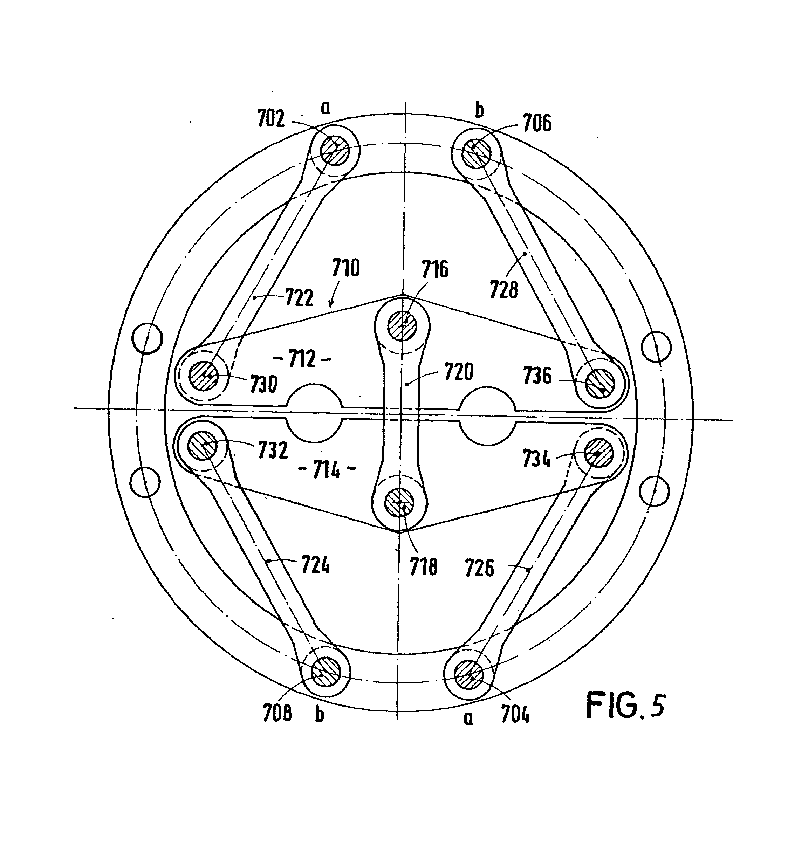

Fig. 5-8 zeigen eine dritte Ausführungsform der Wellenkupplung und deren modifizierte Ausführungen, in denen ein inneres Zwischenglied vorgesehen ist, das axial geteilt ist und dessen Teile gelenkig miteinander verbunden sind. Diese Ausführungsform erfüllt durch die Art ihrer Ausbildung eine kinematische Funktion. Diese kinematische Funktion wird durch das geteilte Zwischenglied ermöglicht, indem jedes Teil des Zwischenglieds den Schwenkbewegungen der Antriebsseite oder der Abtriebsseite schwenkend folgt.

Fig. 5 zeigt zur Verdeutlichung einen Teil einer nur in einer Drehrichtung wirksamen Kupplung dieser Art. Die erste und die zweite Kupplungshälfte weisen diametral gegenüberliegende radiale Ansätze mit Bolzen 702, 704 bzw. 706, 708 auf, die mit a bzw. b bezeichnet sind. Die Bolzen 706, 708 der zweiten Kupplungshälfte sind in der dargestellten Ausführung im Winkel gegen die Bolzen 702, 704 der ersten Kupplungshälfte versetzt, können aber auch damit fluchtend angeordnet sein. Das Zwischenglied 710 von im Schnitt allgemein rhombischer Form ist symmetrisch zur Kupplungsachse so angeordnet, dass die stumpfwinkligen Kanten in Richtung der Bolzen 702, 706 bzw. 704, 708 weisen. Es ist in einer durch die spitzwinkligen Kanten verlaufenden Axialebene in zwei im Querschnitt dreieckförmige Teile 712, 714 geteilt, deren stumpfwinklige Kanten beidseitig durch zwei an Bolzen 716, 718 befestigte Verbindungsglieder 720 aneinander angelenkt sind.

Weitere Verbindungsglieder verbinden die erste Kupplungshälfte über die Teile 712, 714 des Zwischenglieds 710 mit der zweiten Kupplungshälfte. Ein erstes Paar von Verbindungsgliedern 722, 728 verläuft vom Bolzen 702 der ersten Kupplungshälfte zu einem Bolzen 730 an einer spitzwinkligen Kante des ersten Teils 712 und von einem Bolzen 736 an der gegenüberliegenden spitzwinkligen Kante dieses Teils zu dem Bolzen 706 der zweiten Kupplungshälfte; ein zweites Paar von Verbindungsgliedern 726, 724 verläuft entsprechend von dem Bolzen 704 der ersten Kupplungshälfte über Bolzen 734, 732 an den gegenüberliegenden spitzwinkligen Kanten des zweiten Teils 714 zu dem Bolzen 708 der zweiten Kupplungshälfte.

Bei der in Fig. 5 dargestellten Ausführung gehören die mit a bezeichneten Bolzen 702, 704 zur antriebsseitigen Kupplungshälfte. Eine Drehmomentübertragung auf Zugbeanspruchung der Verbindungsglieder kann nur im Uhrzeigersinn über die Verbindungsglieder 722, 728 und 726, 724 und die Teile 712 bzw. 714 des Zwischenglieds 710 erfolgen.

Der bei der Drehmomentübertragung entstehende Widerstand zwischen den antriebs- und abtriebsseitigen Verbindungsgliedern wird über die zwei Verbindungsglieder 720 mittels der zwei Teile 712, 714 des Zwischenglieds aufgenommen. Die kinematische Funktion dieser Anordnung ergibt sich dadurch, dass die Verbindungsglieder 720 aus flexiblem Material wie Federstahllamellen, Federstahldraht oder Stahlseilen bestehen. Durch diese Flexibilität ist es möglich, dass die beiden Teile 712, 714 des Zwischenglieds 710 einander entgegengesetzte Schwenkbewegungen ausführen können. Durch die Schwenkbewegung der Teile 712, 714 zueinander erfolgt ein Ausgleich für die Abstandsänderungen zwischen den antriebsseitigen und abtriebsseitigen Befestigungsstellen der Verbindungsglieder.

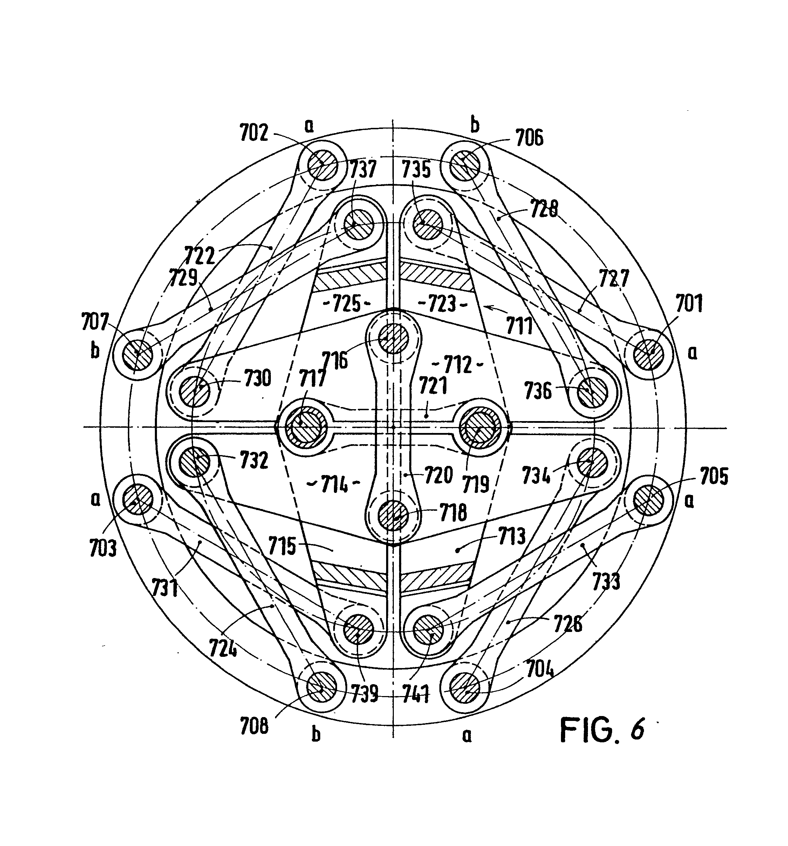

Fig. 6 zeigt eine Ausführung der Wellenküpplung; gleiche Teile in gleicher Anordnung tragen die gleichen Bezugszeichen. Diese Ausführung enthält ein ähnlich aufgebautes zweites System zur Drehmomentübertragung zwischen den Kupplungshälften im gleichen Drehsinn, das gegenüber dem ersten System um 90° verdreht ist.

Das zweite System enthält diametral gegenüberliegende radiale Ansätze mit Bolzen 701, 703, die mit a bezeichnet sind, an der antriebsseitigen Kupplungshälfte und diametral gegenüberliegende radiale Ansätze mit Bolzen 705, 707, die mit b bezeichnet sind, an der abtriebsseitigen Kupplungshälfte. Ein zweites Zwischenglied 711 ist entsprechend von im Schnitt allgemein rhombischer Form mit zwei allgemein dreieckförmigen Teilen 713, 715, deren stumpfwinklige Kanten beidseits durch zwei an Bolzen 717, 719 befestigte Verbindungsglieder 721 aneinander angelenkt sind. Die Teile 713, 715 des Zwischenglieds 711 sind nicht eben, sondern zwischen den gegenüberliegenden spitzwinkligen Kanten mit Einsenkungen 723, 725 versehen, zwischen denen sich die Teile 712, 714 des ersten Zwischenglieds 710 befinden.

Ein drittes Paar von Verbindungsgliedern 727, 733 verläuft vom Bolzen 701 der antriebsseitigen Kupplungshälfte zu einem Bolzen 735 an einer spitzwinkligen Kante des ersten Teils 713 des zweiten Zwischenglieds 711 und von einem Bolzen 741 an der gegenüberliegenden spitzwinkligen Kante dieses Teils zu dem Bolzen 705 der abtriebsseitigen Kupplungshälfte; ein viertes Paar von Verbindungsgliedern 731, 729 verläuft entsprechend von dem Bolzen 703 der antriebsseitigen Kupplungshälfte über Bolzen 739, 737 an den gegenüberliegenden spitzwinkligen Kanten des Teils 715 zu dem Bolzen 707 der abtriebsseitigen Kupplungshälfte.

Wie in Fig. 5 erfolgt auch hier die Drehmomentübertragung zwischen den Kupplungshälften nur bei Verdrehung der antriebsseitigenn Kupplungshälfte im Uhrzeigersinn über die Verbindungsglieder 722, 728 und 726, 724 jeweils über die Teile 712, 714 des Zwischenglieds 710 und über die Verbindungsglieder 727, 733 und 731, 729 jeweils über die Teile 713, 715 des Zwischenglieds 711. Bei unverändert günstiger Flexibilität lassen sich mit dieser Ausführung durch die grössere Zahl von Verbindungsgliedern höhere Drehmomente übertragen.

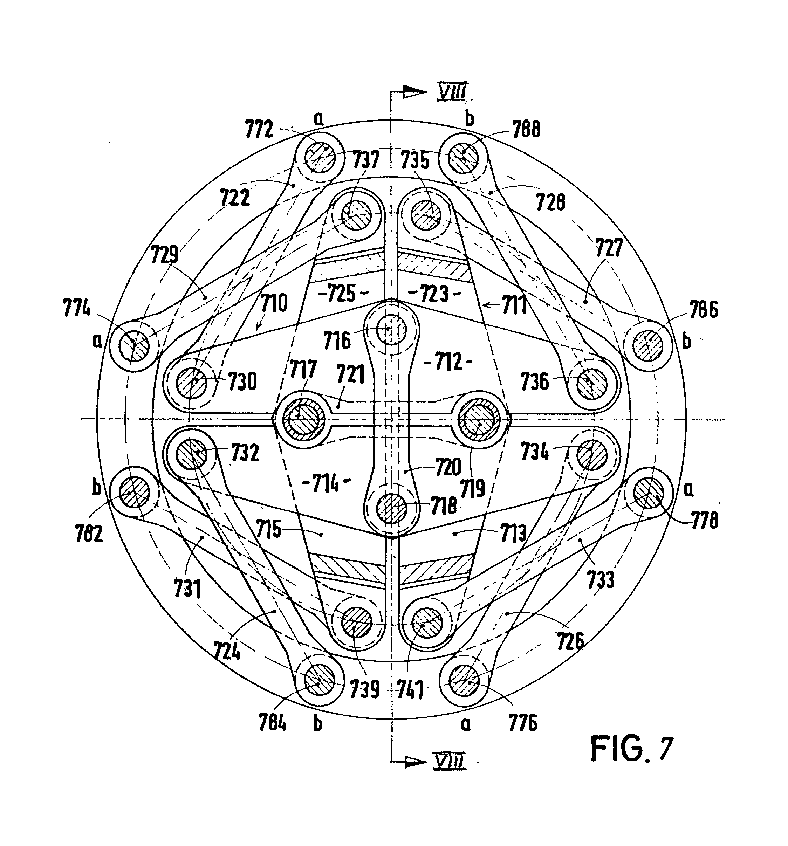

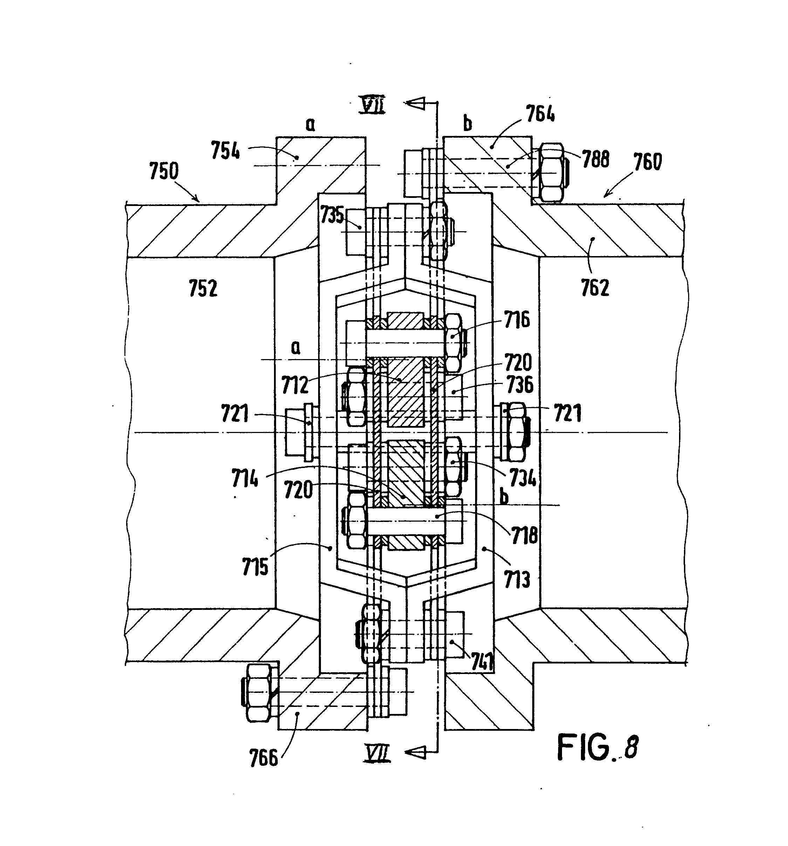

Fig. 7 und 8 zeigen eine modifizierte Ausführung der Wellenkupplung, welche die gleichen Zwischenglieder und Verbindungsglieder in gleicher Anordnung, aber in einer solchen Verbindung enthält, dass die Drehmomentübertragung zwischen den Kupplungshälften in beiden Drehrichtungen erfolgen kann.

Entsprechend der Darstellung in Fig. 8 ist eine erste Kupplungshälfte 750 mit einer Nabe 752 und stirnseitig mit einem radialen Ansatz 754 versehen; eine zweite Kupplungshälfte 760 ist mit einer Nabe 762 und stirnseitig mit einem radialen Ansatz 764 versehen. In Axialbohrungen des Ansatzes 754 befinden sich zwei diametral gegenüberliegende, mit a bezeichnete Paare von Bolzen 772, 774 und 776, 778, von denen in Fig. 8 der Bolzen 776 erkennbar ist; in Axialbohrungen des Ansatzes 764 befinden sich ebenfalls zwei diametral gegenüberliegende, mit b bezeichnete Paare von Bolzen 782, 784 und 786, 788, von denen in Fig. 8 der Bolzen 788 erkennbar ist. Die mit b bezeichnete Bolzenanordnung ist gegenüber der mit a bezeichneten Bolzenanordnung um einen Winkel von ca. 30° entsprechend den baulichen Anforderungen versetzt.

Die Drehmomentübertragung im Uhrzeigersinn bewirken (Fig. 7) ein erstes Paar von Verbindungsgliedern 722, 728, das vom Bolzen 772 der ersten Kupplungshälfte 750 zum Bolzen 730 des ersten Teils 712 bzw. vom Bolzen 736 dieses Teils zum Bolzen 788 der zweiten Kupplungshälfte 760 verläuft, und ein zweites Paar von Verbindungsgliedern 726, 724, das vom Bolzen 776 der ersten Kupplungshälfte 750 zum Bolzen 734 des zweiten Teils 714 bzw. vom Bolzen 732 dieses Teils zum Bolzen 784 der zweiten Kupplungshälfte 760 verläuft. Die Drehmomentübertragung entgegen dem Uhrzeigersinn bewirken ein drittes Paar von Verbindungsgliedern 729, 731, das vom Bolzen 774 der ersten Kupplungshälfte 750 zum Bolzen 737 des zweiten Teils 715 bzw. vom Bolzen 739 dieses Teils zum Bolzen 782 der zweiten Kupplungshälfte 760 verläuft, und ein viertes Paar von Verbindungsgliedern 733, 727, das vom Bolzen 778 der ersten Kupplungshälfte 750 zum Bolzen 741 des ersten Teils 713 bzw. vom Bolzen 735 dieses Teils zum Bolzen 786 der zweiten Kupplungshälfte 760 verläuft.

Es sind hier die Verbindungsglieder auf den Schaft der zugehörigen Bolzen zusammen mit Abstandshülsen oder -ringen aufgeschoben, die nicht im einzelnen dargestellt sind, und entsprechende Bohrungen in den jeweiligen Kupplungsteilen und sind mit Gewinde versehen, auf das eine Mutter aufgeschraubt ist. Beim Festziehen der Mutter werden die Verbindungsglieder und die Abstandshülsen bzw. -ringe gegen die Fläche des jeweiligen Kupplungsteils festgezogen. Die Verbindungsglieder selbst können wie vorher aus Federstahllamellen bestehen, werden aber bei der Ausführung der Wellenkupplung nach Fig. 5-8 vorzugsweise aus Rundmaterial wie Stahlseilen, Federstahldrahtstücken und dgl. gebildet, die mehr Bewegungsfreiheitsgrade als Federstahllamellen besitzen. Ausserdem können die Verbindungsglieder als Lenker mit sphärischen Gummikalotten auf den Bolzen ausgebildet sein.

Es ist weiterhin ohne weiteres möglich, das Zwischenglied nicht nur in der Axialebene einmal, sondern auch mehrfach zu teilen und eine entsprechende Anzahl von Verbindungsgliedern und Ansätzen an den Kupplungshälften vorzusehen, wobei die Anordnung in jedem Falle so getroffen werden kann, dass die Drehmomentübertragung zwischen den Kupplungshälften nur in einer Drehrichtung oder in beiden Drehrichtungen bewirkt wird. Dadurch sind die Teile des Zwischenglieds alle in einer Ebene angeordnet, woraus sich ein günstiger, kompakterer Aufbau der Wellenkupplung bei unvermindert grosser Flexibilität ergibt.

Der Grundgedanke der Erfindung kann in verschiedener, abgewandelter Form verwirklicht werden.

Es können beide Teile des Zwischenglieds von Ringen gebildet sein, welche die Naben der Kupplungshälften umgeben. Die beiden Teile des Zwischenglieds können von zwei konzentrischen Rohren gebildet sein. Eine solche Anordnung gestattet nicht nur einen Winkelversatz sondern nach Art einer Gelenkwelle auch einen begrenzten Radialversatz der Wellen. Um die Gesamtlänge einer solchen Kupplung möglichst klein zu halten, können sich die Naben der beiden Kupplungshälften von beiden Seiten her in das Innere der beiden konzentrischen Rohre erstrecken.

## Patentansprüche

1. Wellenkupplung zwischen einem um eine Eingangsachse umlaufenden Teil und einem um eine Ausgangsachse umlaufenden Teil, welche einen Knickwinkel zwischen Eingangsachse und Ausgangsachse zulässt, enthaltend
   (a) eine erste Kupplungshälfte (10; 404; 750), die mit dem um die Eingangsachse umlaufenden Teil verbindbar ist,
   (b) eine zweite Kupplungshälfte (12; 420; 760), die mit dem um die Ausgangsachse umlaufenden Teil verbindbar ist,
   (c) ein Zwischenglied (50; 710), das zwischen der ersten und der zweiten Kupplungshälfte (10, 12; 404, 420; 750, 760) angeordnet ist,
   (d) zwei Systeme von flexiblen Verbindungsgliedern (58, 88, 90, 94, 96, 98; 450, 454, 460, 464; 720-733), die sich im wesentlichen längs des Umfangs von der ersten Kupplungshälfte zu dem Zwischenglied und von dem Zwischenglied zu der zweiten Kupplungshälfte erstrecken, wobei
   (e) jeweils ein System von flexiblen Verbindungsgliedern (58, 88, 90; 450, 454; 722, 724, 726, 728) sich in einer ersten Drehrichtung und das andere System von flexiblen Verbindungsgliedern (94, 96, 98; 460, 464; 727, 729, 731, 733) sich in einer dazu entgegengesetzten zweiten Drehrichtung in Umfangsrichtung erstreckt,
   dadurch gekennzeichnet, dass
   (f) das Zwischenglied (50, 710) von zwei getrennten Teilen (52, 54; 400, 402) gebildet ist und
   (g) die Verbindungsglieder des einen Systems über den einen dieser Teile und die Verbindungsglieder des anderen Systems über den anderen dieser Teile geführt sind.
2. Wellenkupplung nach Anspruch 1, dadurch gekennzeichnet, dass
   (a) jedes System durchgehende Verbindungsglieder (58) von im wesentlichen kreisrundem Querschnitt enthält,
   (b) die Verbindungsglieder (58) einerseits an der ersten Kupplungshälfte (10) und andererseits an der zweiten Kupplungshälfte (12, 342) befestigt sind und
   (c) jedes Verbindungsglied (58) dem Umfang des Zwischenglieds (50) mindestens an einer Stelle anliegt, das frei zwischen den in regelmässiger Anordnung darum herum angeordneten Verbindungsgliedern (58) gehalten wird.
3. Wellenkupplung nach Anspruch 2, dadurch gekennzeichnet, dass das Zwischenglied (50) an seinem Umfang Rinnen (64) aufweist, in denen die Verbindungsglieder (58) geführt sind.
4. Wellenkupplung nach Anspruch 1, dadurch gekennzeichnet, dass
   (a) das Zwischenglied einen sternförmigen ersten Teil (400) mit gegeneinander winkelversetzten Armen (438, 440, 442) und einen ringförmigen zweiten Teil (402) enthält, der den sternförmigen ersten Teil (400) umgibt,

(b) die erste Kupplungshälfte (404) gegeneinander winkelversetzte axiale Bolzen (414, 416, 418) aufweist,

(c) die zweite Kupplungshälfte (420) gegeneinander winkelversetzte axiale Bolzen (430, 432, 434) aufweist,

(d) an jedem Arm des ersten Teils (400) ein axialer Bolzen (452, 456, 458) sitzt,

(e) der zweite Teil (402) gegeneinander winkelversetzt axiale Bolzen (462, 466, 468) trägt,

(f) Verbindungsglieder (450, 454) sich in einem ersten Drehsinn von den Bolzen (414, 416, 418) der ersten Kupplungshälfte (404) zu den Bolzen (452, 456, 458) des sternförmigen ersten Teils (400) und von diesen letzteren Bolzen zu den Bolzen (430, 432, 434) der zweiten Kupplungshälfte (420) erstrecken und

(g) Verbindungsglieder (460, 464) sich in einem zweiten Drehsinn von den Bolzen (414, 416, 418) der ersten Kupplungshälfte (404) zu den Bolzen (462, 466, 468) des ringförmigen zweiten Teils (402) und von diesen letzteren Bolzen zu den Bolzen (430, 432, 434) der zweiten Kupplungshälfte (420) erstrecken.

5. Wellenkupplung nach Anspruch 4, dadurch gekennzeichnet, dass

(a) die Bolzen (414, 416, 418, 430, 432, 434) der Kupplungshälften (404, 420) sowie die Arme (438, 440, 442) des sternförmigen Teils (400) jeweils um 120° gegeneinander winkelversetzt sind,

(b) die Bolzen (430, 432, 434) der zweiten Kupplungshälfte (420) um 180° gegen die Bolzen (414, 416, 418) der ersten Kupplungshälfte (404) und entsprechend gegen den sternförmigen ersten Teil (400) winkelversetzt sind,

(c) die axialen Bolzen (462, 466, 468) des ringförmigen zweiten Teils (402) an radial einwärtsragenden Ansätzen (448, 444, 446) desselben sitzen und

(d) alle Bolzen der Kupplungshälften (404, 420) sowie des ersten und des zweiten Teils (400, 402) auf einem gemeinsamen Teilkreis (470) angeordnet sind.

6. Wellenkupplung nach Anspruch 1, dadurch gekennzeichnet, dass zwei in ihrer Axialebene einfach geteilte Zwischenglieder (710, 711) vorgesehen sind, deren Teile (712, 714; 713, 715) jeweils an gegenüberliegenden Enden durch Verbindungsglieder (722, 728; 724, 726) mit der einen und mit der anderen Kupplungshälfte und in der Mitte durch beidseitig verlaufende Verbindungsglieder (720) miteinander verbunden sind und die um 90° gegeneinander winkelversetzt sind, und dass die Teile (713, 715) des einen Zwischenglieds (711) das andere Zwischenglied (710) auf beiden Seiten einschliessende Einsenkungen (723, 725) aufweisen.

7. Wellenkupplung nach Anspruch 6, dadurch gekennzeichnet, dass eines der beiden Zwischenglieder (711) seitenverkehrt im Vergleich zu dem anderen Zwischenglied (710) mit den beiden Kupplungshälften (750, 760) verbunden ist.

## Claims

1. Shaft coupling between an element rotating about an input axis and an element rotating about an output axis, which permits a deflection angle between input axis and output axis, comprising

(a) a first coupling half (10; 404; 750) adapted to be connected to the element rotating about the input axis,

(b) a second coupling half (12; 420; 760) adapted to be connected to the element rotating about the output axis,

(c) an intermediate member (50; 710) arranged between the first and the second coupling half (10, 12; 404; 750, 760),

(d) two systems of flexible connecting members (58, 88, 90, 94, 96, 98; 450, 454, 460, 464; 720-733) which extend essentially along the periphery from the first coupling half to the intermediate member and from the intermediate member to the second coupling half,

(e) one system of flexible connecting members (58, 88, 90; 450, 454; 722, 724, 726, 728) extending in peripheral direction in a first direction of rotation and the other system of flexible connecting members (94, 96, 98; 460, 464; 727, 729, 731, 733) extending in a second direction of rotation opposite thereto,
characterised in that

(f) the intermediate member (50, 710) is formed by two separate elements (52, 54; 400, 402), and

(g) the connecting members of one system are led through one of these elements and the connecting members of the other system are led through the other element.

2. Shaft coupling as set forth in claim 1, characterized in that

(a) each system contains continuous connecting members (58) of substantially circular cross section,

(b) the connecting members (58) are attached to the first coupling half (10) on the one hand and to the second coupling half (12, 342) on the other hand, and

(c) each connecting member (58) engages the periphery of the intermediate member (50) at at least one point, which intermediate member (50) is held freely between the connecting members (58) arranged therearound in regular arrangement.

3. Shaft coupling as set forth in claim 2, characterized in that the intermediate member (50) has grooves (64) in its periphery, in which the connecting members (58) are guided.

4. Shaft coupling as set forth in claim 1, characterized in that

(a) the intermediate member contains a star-shaped first element (400) having arms (438, 440, 442) angularly offset and an annular second element (402) surrounding the star-shaped first element (400),

(b) the first coupling half (404) has axial pins (414, 416, 418) angularly offset,

(c) the second coupling half (420) has axial pins (430, 432, 434) angularly offset,

(d) an axial pin (452, 456, 458) is located at each arm of the first element (400),

(e) the second element (402) carries axial pins (462, 466, 468) angularly offset,

(f) connecting members (450, 454) extend in a first sense of rotation from the pins (414, 416, 418) of the first coupling half (404) to the pins (452, 456, 458) of the star-shaped first element (400) and from these latter pins to the pins (430, 432, 434) of the second coupling half (420), and

(g) connecting members (460, 464) extend in a second sense of rotation from the pins (414, 416, 418) of the first coupling half (404) to the pins (462, 466, 468) of the annular second element (402) and from these latter pins to the pins (430, 432, 434) of the second coupling half.

5. Shaft coupling as set forth in claim 4, characterized in that

(a) the pins (414, 416, 418, 430, 432, 434) of the coupling halves (404, 420) and the arms (438, 440, 442) of the star-shaped element (400) are angularly offset by 120°,

(b) the pins (430, 432, 434) of the second coupling half (420) are angularly offset by 180° with respect to the pins (414, 416, 418) of the first coupling half (404) and correspondingly offset with respect to the star-shaped first element (400),

(c) the axial pins (462, 466, 468) of the annular second element (402) are supported on projections (448, 444, 446) thereof extending radially inwardly, and

(d) all pins of the coupling halves (404, 420) and of the first and of the second elements (400, 402) are arranged on a common reference circle (470.

6. Shaft coupling as set forth in claim 1, characterized in that two intermediate members (710, 711) singly separated in their axial plane are provided, the element (712, 714; 713, 715) of which are connected at opposite ends through connecting members (722, 728; 724, 726) to the one and to the other coupling half and connected with each other in the center through connecting members (720) extending on both sides thereof which are angularly offset by 90°, and in that the elements (713, 715) of one intermediate member (711) have depressions (723, 725) enclosing the other intermediate member (710) on both sides.

7. Shaft coupling as set forth in claim 6, characterized in that one of the two intermediate members (711) is connected to the two coupling halves (750, 760) laterally inverted as compared to the other intermediate member (710).

**Revendications**

1. Accouplement d'arbres entre un élément tournant autour d'un axe d'entrée et un élément tournant autour d'un axe de sortie, qui permet un angle de coude entre l'axe d'entrée et l'axe de sortie, comportant

(a) un premier demi-accouplement (10; 404; 750) qui peut être relié à l'élément tournant autour de l'axe d'entrée,

(b) un deuxième demi-accouplement (12; 420; 760) qui peut être relié à l'élément tournant autour de l'axe de sortie,

(c) un élément intermédiaire (50; 710) qui est disposé entre le premier et le deuxième demi-accouplement (10, 12; 404, 420; 750, 760),

(d) deux systèmes d'éléments de raccordement flexibles (58, 88, 90, 94, 96, 98; 450, 454, 460, 464; 720-733), qui s'étendent essentiellement le long de la périphérie, depuis le premier demi-accouplement jusqu'à l'élément intermédiaire et depuis l'élément intermédiaire jusqu'au deuxième demi-accouplement,

(e) un système d'éléments de raccordement flexibles (58, 88, 90; 450, 454; 722, 724, 726, 728) s'étendant dans la direction périphérique dans un premier sens de rotation et l'autre système d'éléments de raccordement flexibles (94, 96, 98; 460; 464; 727, 729, 731, 733) dans un deuxième sens de rotation opposé à celui-là,
caractérisé par le fait que

(f) l'élément intermédiaire (50, 710) est formé de deux éléments (52, 54; 400, 402) séparés, et

(g) les éléments de raccordement de l'un des systèmes sont guidés sur l'un de ces éléments et les éléments de raccordement de l'autre système sont guidés sur l'autre de ces éléments.

2. Accouplement d'arbres selon la revendication 1, caractérisé par le fait que

(a) chaque système comporte des éléments de raccordement (58) continus dont la section transversale est essentiellement circulaire,

(b) les éléments de raccordement (58) sont attachés d'un côté au premier demi-accouplement (10) et de l'autre côté au deuxième demi-accouplement (12, 342), et

(c) chaque élément de raccordement (58) s'applique en au moins un point à la périphérie de l'élément intermédiaire (50) qui est tenu librement entre les éléments de raccordement (58) rangés en disposition régulière autour de celui-ci.

3. Accouplement d'arbres selon la revendication 1, caractérisé par le fait que l'élément intermédiaire (50) présente sur sa périphérie des gouttières (64), dans lesquelles les éléments de raccordement (58) sont guidés.

4. Accouplement d'arbres selon la revendication 1, caractérisé par le fait que

(a) l'élément intermédiaire comporte un premier élément (400) en forme d'étoile avec des bras (438, 440, 442) décalés angulairement entre eux, et un deuxième élément (402) annulaire qui entourne le premier élément (400) en forme d'étoile,

(b) le premier demi-accouplement (404) présente des boulons (414, 416, 418) axiaux décalés angulairement entre eux,

(c) le deuxième demi-accouplement (420) présente des boulons (430, 432, 434) axiaux décalés angulairement entre eux,

(d) sur chaque bras du premier élément (400) est situé un boulon (452, 456, 458) axial,

(e) le deuxième élément (402) porte des boulons (462, 466, 468) axiaux décalés angulairement entre eux,

(f) des éléments de raccordement (450, 454) s'étendent dans un premier sens de rotation depuis les boulons (414, 416, 418) du premier demi-accouplement (404) jusqu'aux boulons (452, 456, 458) du premier élément (400) en forme d'étoile et depuis ces derniers boulons jusqu'aux boulons (430, 432, 434) du deuxième demi-accouplement (420) et,

(g) des éléments de raccordement (460, 464) s'étendent dans un deuxième sens de rotation depuis

8

les boulons (414, 416, 418) du premier demi-accouplement (404) jusqu'aux boulons (462, 466, 468) du deuxième élément (402) annulaire et depuis ces derniers boulons jusqu'aux boulons (430, 432, 434) du deuxième demi-accouplement (420).

5. Accouplement d'arbres selon la revendication 4, caractérisé per le fait que

(a) les boulons (414, 416, 418, 430, 432, 434) des demi-accouplements (404, 420) ainsi que les bras (438, 440, 442) de l'élément (400) en forme d'étoile sont décalés angulairement de 120° entre eux,

(b) les boulons (430, 432, 434) du deuxième demi-accouplement (420) sont décalés angulairement de 180° par rapport aux boulons (414, 416, 418) du premier demi-accouplement (404) et de manière correspondante par rapport au premier élément (400) en forme d'étoile,

(c) les boulons (462, 466, 468) axiaux du deuxième élément (402) annulaire sont situés sur des appendices (448, 444, 446) de celui-ci s'étendant radialement vers l'intérieur, et

(d) tous les boulons des demi-accouplements (404, 420) ainsi que ceux du premier et du deuxième élément (400, 402) sont disposés sur un cercle primitif de référence (470) commun.

6. Accouplement d'arbres selon la revendication 1, caractérisé par le fait que deux éléments intermédiaires (710, 711) divisés simplement dans leur plan axial, dont les éléments (712, 714; 713, 715) sont reliés par les extrémités opposées par l'intermédiaire d'éléments de raccordement (722, 728; 724, 726) à l'une et à l'autre demi-accouplement et reliés entre eux au centre par l'intermédiaire d'éléments de raccordement (720) s'étendant bilatéralement et qui sont décalés angulairement de 90° entre eux, sont prévus, et que les éléments (713, 715) d'un élément intermédiaire (711) présentent des dépressions (723, 725) entourant l'autre élément intermédiaire (710) sur les deux côtés.

7. Accouplement d'arbres selon la revendication 6, caractérisé par le fait que l'un des deux éléments intermédiaires (711) est relié aux deux demi-accouplements (750, 760) de manière inversée par rapport à l'autre élément intermédiaire (710).

0 038 835

FIG. 1

11

FIG. 2

FIG. 3

FIG. 4

FIG.5

FIG. 6

FIG. 7

FIG. 8